Europäisches Patentamt

European Patent Office

Office européen des brevets

(11) Veröffentlichungsnummer: **0 042 909**
**B1**

(12) **EUROPÄISCHE PATENTSCHRIFT**

(45) Veröffentlichungstag der Patentschrift: **21.01.87**

(51) Int. Cl.⁴: **B 60 K 5/12**, F 16 F 9/10

(21) Anmeldenummer: **81101998.3**

(22) Anmeldetag: **18.03.81**

(54) **Hydraulisch dämpfendes Einkammerlager.**

(30) Priorität: **27.06.80 DE 3024091**

(43) Veröffentlichungstag der Anmeldung:
**06.01.82 Patentblatt 82/01**

(45) Bekanntmachung des Hinweises auf die
Patenterteilung:
**21.01.87 Patentblatt 87/04**

(84) Benannte Vertragsstaaten:
**BE FR GB IT NL SE**

(56) Entgegenhaltungen:
EP-A-0 006 819
EP-A-0 014 742
DE-A-2 727 244
DE-A-2 802 896
US-A-3 137 466

(73) Patentinhaber: **Boge GmbH**
**Bogestrasse 50**
**D-5208 Eitorf/Sieg (DE)**

(72) Erfinder: **Brenner, Heinz, Ing. grad.**
**Am Thurmberg 11**
**D-5483 Bad Neuenahr-Ahrweiler (DE)**
Erfinder: **Büth, Peter**
**Himmelsburger Strasse 145**
**D-5483 Bad Neuenahr-Ahrweiler (DE)**
Erfinder: **Meyer, Heinrich, Dipl.-Ing.**
**Am Limperichsberg 4**
**D-5330 Königswinter 41 (DE)**
Erfinder: **Neuburger, Wilhelm**
**Schlossallee 19**
**D-5300 Bonn-Bad Godesberg (DE)**
Erfinder: **Quast, Jörn-Reiner, Ing. grad.**
**Am Kurgarten 64**
**D-5485 Sinzig-Bad Bodendorf (DE)**
Erfinder: **Reuter, Horst, Ing. grad.**
**Am Sonnenhang 9**
**D-5307 Wachtberg Oberbachem (DE)**
Erfinder: **Schmidt, Kurt**
**Ringstrasse 34**
**D-5483 Bad Neuenahr-Ahrweiler (DE)**
Erfinder: **Zelesnik, Manfred**
**Weeg 10**
**D-5204 Lohmar 1 (DE)**

Courier Press, Leamington Spa, England.

## Beschreibung

Die Erfindung bezieht sich auf ein hydraulisch dämpfendes Einkammerlager, insbesondere Motorlager für Kraftfahrzeuge, bestehend aus einer ersten elastischen und einer zweiten, metallischen Stirnwand und einer sich zwischen den beiden Stirnwänden erstreckenden, gummielastischen Umfangswand begrenzten, mit Dämpfungsflüssigkeit gefüllten Kammer, die über eine Drosselstelle mit einem zumindest einen Teil der Dämpfungsflüssigkeit der Kammer drucklos aufnehmenden, elastisch verformbaren Ausgleichsraum in Strömungsverbindung steht.

Es sind ähnliche Lager bekannt (z.B. DE—A—27 27 244), bei denen eine erste Stirnwand aus Metall, eine elastische Umfangswand und eine zweite Stirnwand vorgesehen sind. Dabei wird die Unterteilung der Kammer durch eine Drosselwand, die gleichzeitig die Drosselbohrung aufweist, vorgenommen. Die Stirnwände sind dabei im wesentlichen starr angeordnet und die Drosselwand kann ein axiales Spiel ausführen, mit dem Nachteil, daß durch die externen Wegbegrenzungen ein Klappern der Drosselwand nicht zu vermeiden ist.

Darüber hinaus sind weitere Lager bekannt (z.B. DE—A 28 o2 896), die ebenfalls starre Stirnwände aufweisen und zur Trennung der Kammern in der Mitte des Lagers eine Drosselwand aufweisen.

Hiervon ausgehend ist es Aufgabe der Erfindung, ein Einkammerlager mit einer membranartigen, oszillierbaren, mit axialem beidseitig definiertem Spiel ausgebildeten Stirnwand so weiterzubilden, daß ein Auftreten von Klappergeräuschen verhindert wird und daß die membranartige Stirnwand im Bereich der hochfrequenten Schwingungen mit einer Amplitude bis etwa 0,3, mm eine verhältnismäßig weiche und bei den niederfrequenten Schwingungen mit Amplituden größer als 0,3 mm eine starkt progressive Federcharakteristik aufweisen soll.

Zur Lösung dieser Aufgabe ist erfindungsgemäß vorgesehen, daß die erste Stirnwand membranartig an ihrem Aussenumfang fest eingespannt ist, wobei durch den verwendeten Werkstoff der ersten Stirnwand beidseitige, axial definierte Auslenkungen ausführbar sind. Vorteilhaft ist bei dieser Ausbildung, daß der Forderung, hochfrequente Schwingungen mit kleinen Amplituden nicht zum dämpfen und niederfrequente Schwingungen mit größen Amplituden stark zu dämpfen, gerecht wird. Dabei ist die membranartige Stirnwand mit axial, beidseitig definierten Auslenkungen oszillierbar. Die axial definierte Auslenkung der membranartigen Stirnwand wird dabei ohne besondere axiale Anschläge bestimmt, zwischen denen ein weitgehend starrer Teil der membranartigen Stirnwand hin- und herbewegbar ist. Bei diesem Einkammerlager kann es insbesondere bei vertikalem Einbau beim Anlassen des Motor sowie bei untertourigem Motorbetrieb nicht mehr zu einem Klappern de membranartigen Stirnwand und damit des Einkammerlagers kommen.

Darüber hinaus wird bei dem beschriebenen Einkammerlager nach weiteren wesentlichen Merkmalen vorgeschlagen, daß entweder die aus einer Metallfolie oder einem folienbeschichteten Gewebe bestehende membranartige Stirnwand im Einspannbereich des Widerlagers beidseitig mit einer elastisch verformbaren Schicht, vorzugsweise aus Gummi oder Kunststoff versehen ist ider die aus elastischem Werkstoff bestehende und mittels eines angesetzten blechartigen Ringes im Widerlager eingespannte membranartige Stirnwand mindestens eine konzentrische Zone mit verringertem Querschnitt aufweist.

Eine derartig ausgebildete membranartige Stirnwand besitzt die erforderlichen, unterschiedlichen Federungseigenschaften, so daß keine externen Anschläge für die Membran selbst vorgesehen werden müssen. Ein Klappern der membranartigen Stirnwand und damit des Einkammerlagers kann daher nicht mehr auftreten. Die Federungseigenschaften der membranartigen Stirnwand können bei der Metallfolie oder dem folienbeschichten Gewebe durch entsprechende Wahl der Dicke oder der Elastizität der elastisch verformbaren Schichten und bei dem elastischen Werkstoff durch entsprechende Wahl der Größe und/oder der Form der Querschnittsverringerungen vorherbestimmt und den Erfordernissen angepaßt werden.

Die Erfindung wird nachfolgend anhand mehrerer in einer Zeichnung dargestellter Ausführungsbeispiele näher erläutert. Dabe zeigen:

Fig. 1 eine Ansicht-/Schnittdarstellung eines Einkammerlagers mit einer erfindungsgemäßen Ausbildung der membranartigen Stirnwand und

Fig. 2—5 weitere Ausbildungen der membranartigen Stirnwand.

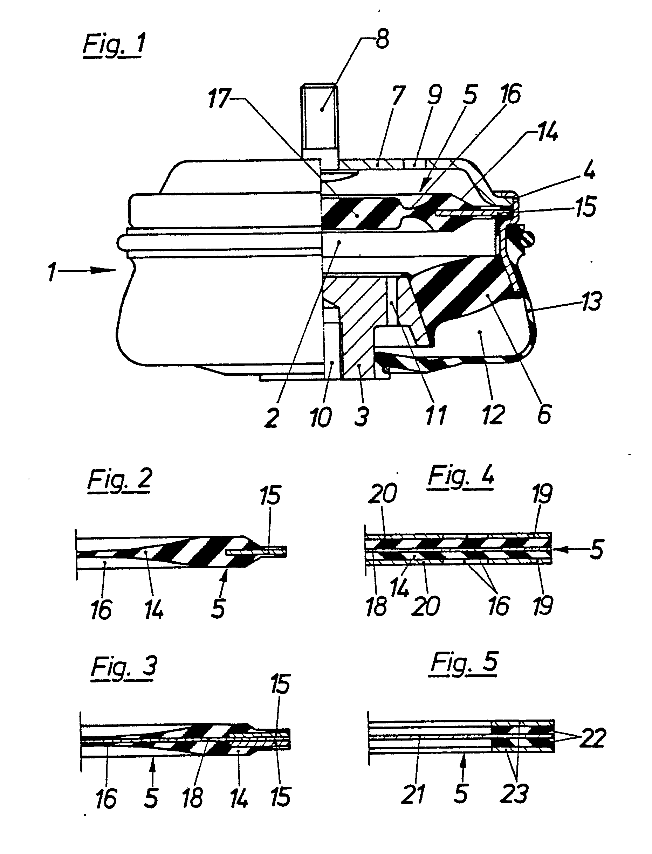

Das in der Fig. 1 gezeigte Einkammerlager 1 besitzt eine mit Dämpfungsflüssigkeit gefüllte Kammer 2, die von einer festen, metallischen Stirnwand 3, einer membranartigen, in ein Widerlager 4 eingespannten Stirnwand 5 und einer die beiden Stirnwände 3, 5 bzw. die Stirnwand 3 und das Widerlager 4 miteinander verbindenden gummielastischen Umfangswand 6 begrenzt ist. In das Widerlager 4 ist gleichzeitig auch einer Deckplatte 7 mit einem Befestigungsstift 8 und eine Belüftungsöffnung 9 eingesetzt. In die Stirnwand 3, die eine Befestigungsöffnung 10 besitzt, ist eine Drosselöffnung 11 eingearbeitet, über die die Kammer 2 mit einem Ausgleichsraum 12 in Strömungsverbindung steht. Dieser Ausgleichsraum 12 wird nach außen von einem gummielastische Balg 13 begrenzt, der eine drucklose Aufnahme der aus der Kammer 2 über die Drosselöffnung 11 ausströmenden Dämpfungsflüssigkeit sicherstellt.

Die membranartige Stirnwand 5 besteht gemäß der Fig. 1 aus einem flachen Gummiteil 14, das an seinem Außenrand mit einem einvulkanisierten Blechring 15 verbunden und über denselben fest im Widerlager 4 eingespannt ist. Nahe dem Blechring 15 ist das Gummiteil 14 an beiden Seiten jeweils mit einer konzentrischen, ringförmigen, eine vorbestimmte Querschnittsverringerung bewirkenden Einschnürung 16 versehen. Diese Einschnürung 16 bewirkt in diesem Bereich eine verhältnismäßig starke elastische Verformung, während der mittlere Bereich 17 des Gummiteiles 14 kaum verformt wird und bei der Oszillation der Stirnwand 5 eine annähernd parallele Bewegung ausführt. Um eine Verformung des mittleren Bereiches 17 des Gummiteiles 14 auszuschließen, kann derselbe zusätzlich mit einer in der Zeichnung nicht dargestellten Armierung versehen sein.

Die membranartige Stirnwand 5 gemäß Fig. 2 besteht ebenfalls aus einem flachen Gummiteil 14, das an seinem Außenrand auch einen einvulkanisierten Blechring 15 besitzt. Das Gummiteil 14 weist hier jedoch in seinem mittleren Bereich eine Querschnittsverringerung 16 auf, die allmählich von außen zur Mitte abnimmt. Auch durch diese Ausbildung wird die angestrebte und weiter oben erläuterte Federrungsscharakteristik erreicht.

Die in der Fig. 3 gezeigte membranartige Stirnwand 5 besitzt im wesentlichen den gleichen Aufbau wir die Stirnwand 5 der Fig. 2. Hier ist zusätzlich jedoch eine sich über die gesamte Fläche der Stirnwand 5 erstreckende folien- oder gewebeartige Armierung 18 eingebracht, die eine Teilung des Blechringes 15 bzw. einen doppelten Blechring 15 zum besseren Anschluß der Armierung 18 erforderlich macht.

Die membranartige Stirnwand 5, die in der Fig. 4 dargestellt ist, besteht aus einer in einem flachen Gummiteil 14 eingebetteten folien- oder gewebeartigen Armierung 18, wobei auf die äußeren Flächen des Gummiteiles 14 jeweils ein äußerer, im Einspannbereich der Stirnwand 15 befindlicher Blechring 19 und eine zentrische Verstärkungsplatte 20 aufgebracht bzw. aufvulkanisiert sind. Der von den Blechringen 19 und den Verstärkungsplatten 20 nicht bedeckte ringförmige Bereich bildet eine Einschnürung 16, die die gleiche Wirkung wie bei der membranartigen Stirnwand 5 der Fig. 1 hat.

In der Fig. 5 der Zeichnung ist schließlich eine membranartige Stirnwand 5 dargestellt, die aus einer Metallfolie oder einem folienbeschichteten Gewebe 21 besteht. Diese Metallfolie bzw. das Gewebe 21 ist vorzugsweise nur im Einspannbereich beidseitig mit einer ringförmigen Gummischicht 22 behaftet, auf die wiederum ein Blechring 23 aufgebracht ist. Die angestrebte Federungscharakteristik wird hier insbesondere durch die Dicke der Gummischichten 22 erreicht.

Bezugszeichenliste

1 Einkammerlager
2 Kammer
3 Stirnwand
4 Widerlager
5 Stirnwand
6 Umfangswand
7 Deckplatte
8 Befestigungsstift
9 Belüftungsöffnung
10 Befestigungsöffnung
11 Drosselöffnung
12 Ausgleichsraum
13 Balg
14 Gummiteil
15 Blechring
16 Einschnürung
17 Mittlerer Bereich
18 Armierung
19 Blechring
20 Verstärkungsplatte
21 Metallfolie, Gewebe
22 Gummischicht
23 Blechring

**Patentansprüche**

1. Hydraulisch dämpfendes Einkammerlager (1), insbesondere Motorlager für Kraftfahrzeuge, bestehend aus einer ersten, elastischen einer zweiten, metallischen Stirnwand (5, 3) und einer sich zwischen den beiden Stirnwänden erstreckenden, gummielastischen Umfangswand (6) begrenzten, mit Dämpfungsflüssigkeit gefüllten Kammer (2), die über eine Drosselstelle (11) mit einem zumindést einen Teil der Dämpfungsflüssigkeit der Kammer (2) drucklos aufnehmenden, elastisch verformbaren Ausgleichsraum (12) in Strömungsverbindung steht, dadurch gekennzeichnet, daß die erste Stirnwand (5) membranartig an ihrem Aussenumfang fest eingespannt ist, wobei durch den verwendeten Werkstoff der ersten Stirnwand (5) beidseitige, axial definierte Auslenkungen ausführbar sind.

2. Lager nach Anspruch 1, dadurch gekennzeichnet, daß die aus einer Metallfolie oder einem folienbeschichteten Gewebe (21) bestehende membranartige Stirnwand (5) im Einspannbereich des Widerlagers (4) beidseitig mit einer elastisch verformbaren Schicht (22) versehen ist.

3. Lager nach Anspruch 2, dadurch gekennzeichnet, daß die elastisch verformbaren Schichten (22) aus Gummi oder Kunststoff bestehen.

4. Lager nach Anspruch 2 oder 3, dadurch gekennzeichnet, daß sich die elastisch verformbaren Schichten (22) über die gesamte Fläche der Stirnwand (5) erstrecken.

5. Lager nach Anspruch 2 bis 4, dadurch gekennzeichnet, daß die elastisch verformbaren Schichten (22) im Einspannbereich des Widerlagers (4) jeweils mit einem ringförmigen Blech (23) versehen sind.

6. Lager nach Anspruch 1, dadurch gekennzeichnet, daß die aus elastischem Werkstoff bestehende und mittels eines angesetzten blechartigen Ringes (15) im Widerlager (4) eingespannte membranartige Stirnwand (5) mindestens eine konzentrische Zone (16) mit verringertem Querschnitt aufweist.

7. Lager nach Anspruch 6, dadurch gekennzeichnet, daß die Querschnittsverringerung (16) im mittleren Bereich der membranartigen Stirnwand (5) vorgesehen ist.

8. Lager nach Anspruch 6, dadurch gekennzeichnet, daß die Querschnittsverringerung (16) in einer ringartigen Außenzone der membranartigen Stirnwand (5) vorgesehen ist.

9. Lager nach Anspruch 8, dadurch gekennzeichnet, daß die Querschnittsverringerung (16) durch zentrisch auf die membranartige Stirnwand (5, 14) aufgesetzte Verstärkungsplatten (20) gebildet ist.

10. Lager nach Anspruch 6 bis 8, dadurch gekennzeichnet, daß die membranartige Stirnwand (5, 14) über ihre gesamte Fläche mit einer folien- oder gewebeartigen Armierung (18) versehen ist.

**Revendications**

1. Support à chambre unique d'amortissement hydraulique (1), en particulier support de moteur pour véhicules automobiles, comprenant une première paroi d'extrémité élastique (5), une deuxième paroi d'extrémité métallique (3) et, entre elles, une chambre (2) remplie de liquide d'amortissement, délimitée latéralment par une paroi périphérique (6) en caoutchouc ou matériau analogue, qui communique à travers un point d'étranglement (11) avec un volume d'égalisation (12) élastiquement déformable et pouvant recevoir une partie au moins du liquide d'amortissement de la chambre (2) sans pression, caractérisé en ce que la première paroi d'extrémité (5) est fixée à son pourtour, par serrage, à la façon d'une membrane, et le matériau utilisé pour la première paroi d'extrémité (5) permet à celle-ci d'effectuer des débattements axialement définis vers les deux côtés.

2. Support selon la revendication 1, caractérisé en ce que la paroi d'extrémité (5) semblable à une membrane est constituée d'une feuille métallique ou d'un tissu double d'une feuille (21) et est pourvue, sur les deux côtés, d'une couche élastiquement déformable (22) dans la zone de serrage de son pourtour dans une pièce d'appui (4).

3. Support selon la revendication 2, caractérisé en ce que les couches élastiquement déformables (22) sont en caoutchouc ou matière plastique.

4. Support selon la revendication 2 ou 3, caractérisé en ce que les couches élastiquement déformables (22) s'étendent sur toute la surface de la paroi d'extrémité (5).

5. Support selon les revendications 2 à 4, caractérisé en ce que les couches élastiquement déformables (22) sont pourvues chacune d'une tôle en forme d'anneau (23) dans la zone de serrage dans la pièce d'appui (4).

6. Support selon la revendication 1, caractérisé en ce que la paroi d'extrémité (5) semblable à une membrane est en matériau élastique, est serrée dans une pièce d'appui au moyen d'un anneau rapporté (15) en tôle ou matériau analogue et possède au moins une zone concentrique (16) de section réduite.

7. Support selon la revendication 6, caractérisé en ce que la réduction de section (16) est prévue dans la partie centrale de la paroi (5).

8. Support selon la revendication 6, caractérisé en ce que la réduction de section (16) est prévue dans une zone annulaire extérieure de la paroi (5).

9. Support selon la revendication 8, caractérisé en ce que la réduction de section (16) est définie par des plaques de renforcement (20) disposées de façon centrée sur la paroi (5, 14).

10. Support selon les revendications 6 à 8, caractérisé en ce que la paroi (5, 14) est pourvue d'une armature (14) en forme de feuille ou de tissue, s'étendant sur toute sa surface.

**Claims**

1. Mounting with a single hydraulic damping chamber (1), in particular an engine mounting for motor vehicles, comprising a first elastic and a second metallic wall (5, 3) and a resilient rubber peripheral wall (6) extending between the two walls to define a chamber (2) filled with damping fluid, the chamber being in flow communication through a throttle point (11) with an elastically deformable make-up space (12) which receives at least part of the damping fluid from the chamber (2) at zero pressure, characterised in that the first wall (5) is rigidly clamped at its outer periphery in the manner of a diaphragm, so that by virtue of the material employed for the first wall (5) axially defined excursions in both directions can be made.

2. Mounting according to Claim 1, characterised in that the diaphragm-like wall (5) made of a metal foil or a foil-coated fabric (21) is provided with an elastically deformable layer (22) on both faces in the region where it is clamped by the abutment (4).

3. Mounting according to Claim 2, characterised in that the elastically deformable layers (22) are made of rubber or plastics.

4. Mounting according to Claims 2 or 3, characterised in that the elastically deformable layers (22) extend over the whole surface of the wall (5).

5. Mounting according to Claim 2 or 4, characterised in that the elastically deformable layers (22) are each provided with a respective sheet metal ring (23) in the region where the wall is clamped by the abutment (4).

6. Mounting according to Claim 1, characterised in that the diaphragm-like wall (5) made of elastic material and clamped in the abutment (4) by means of a sheet-metal ring (15) applied to it has at least one concentric zone (16) of reduced cross-section.

7. Mounting according to Claim 6, characterised in that the reduction in cross-section (16) is provided in the central region of the diaphragm-like wall (5).

8. Mounting according to Claim 6, characterised in that the reduction in cross-section (16) is provided in an annular outer zone of the diaphragm-like wall (5).

9. Mounting according to Claim 8, characterised in that the reduction in cross-section (16) is formed by reinforcing plates (20) applied to the centre of the diaphragm-like wall (5, 14).

10. Mounting according to Claim 6 to 8, characterised in that the diaphragm-like wall (5, 14) is provided over its entire area with a foil or textile reinforcement (18).

Fig. 1

Fig. 2

Fig. 4

Fig. 3

Fig. 5